# NEUE EUROPÄISCHE PATENTSCHRIFT

(11) **EP 0 728 299 B2**
(45) Veröffentlichungstag und Bekanntmachung des Hinweises auf die Entscheidung über den Einspruch: **09.10.2002**
(45) Hinweis auf die Patenterteilung: 12.01.2000
(21) Anmeldenummer: 95932682.8
(22) Anmeldetag: 07.09.1995
(51) Int. Cl.: G01M 1/02

(54) **Einknopfbedienung einer Auswuchtmaschine**
Operating a balancing machine with one operating element
Commande d'une machine d'équilibrage avec un élément de commande

(30) Priorität: 08.09.1994 DE 4432015
(43) Veröffentlichungstag der Anmeldung: 28.08.1996
(73) Patentinhaber: Beissbarth GmbH, 80993 München (DE)
(72) Erfinder: BUX, Hermann, D-82343 Pöcking (DE); ROSS, Peter, D-80992 München (DE); SCHOMMER, Stefan, D-82152 Martinsried (DE)
(74) Vertreter: Kirschner, Klaus Dieter, Dipl.-Phys.
(86) Internationale Anmeldenummer: EP9503516
(87) Internationale Veröffentlichungsnummer: WO96007879

(56) Entgegenhaltungen:
- EP-A- 0 071 207
- EP-A- 0 448 005
- EP-A- 0 515 885
- EP-A- 0 520 159
- DE-A- 3 629 921
- DE-A- 3 702 819
- DE-T- 3 883 661
- US-A- 5 156 049
- PATENT ABSTRACTS OF JAPAN PATENT ABSTRACTS OF JAPAN vol. 17 no. 665 (E-1472) ,8.Dezember 1993 vol. 17 no. 665 (E-1472) ,8.Dezember 1993 & JP,A,52 019589 (SONY CORP.) 27.August & JP,A,52 019589 (SONY CORP.) 27.August 1993, 1993,
- Prospekt microtec 600 8.90 Beissbarth-Rohé Prospekt microtec 600 8.90 Beissbarth-Rohé

## Beschreibung

Die Erfindung bezieht sich auf ein Verfahren zur Bedienung einer Auswuchtmaschine und ein Bedienelement zur Durchführung des Verfahrens.

Bei den herkömmlichen Radauswuchtmaschinen erfolgt die Bedienung über mehrere Knöpfe und/oder Tasten. Dies erfordert eine genaue Kenntnis aller Bedienelemente durch den Benutzer. Ist der Benutzer nicht besonders geübt im Umgang mit der Maschine, so wird ein zeitraubendes Suchen der Bedienelemente auf der Bedienkonsole notwendig. Dabei können leicht Irrtümer auftreten, die den Radauswuchtvorgang verlängern und/oder die Ergebnisse verfälschen.

Aus dem Prospekt (Beissbarth-Rohé) microtec 600 "Infrarot-Elektronik-Multi-Kommunikation. Die neue Formel zum Wuchten am Wagen mit der microtec 600,,, ausgegeben 08.90, ist eine Wuchtmaschine mit einer Starttaste bekannt, bei deren Betätigung der Meßvorgang aktiviert wird und kurze Zeit später eine Datenanzeige erhalten wird, wobei die Unwuchtgröße digital und die Richtung der Unwucht in einer Reifengrafik dargestellt wird. Die Wuchtmaschine wird mittels eines Tastenfeldes aus sechs Tasten bedient. Das Umschalten der Anzeige auf verschiedene Radtypen erfolgt mit einer zweiten Taste, die von der Starttaste verschieden ist. Weitere Funktionen werden mit weiteren Tasten ausgeführt.

Aus der EP-A2-71207 ist ein elektrischer Drehschalter mit einer durch ein Bedienungsglied drehbar und axial verschiebbar zu betätigender Welle bekannt, der als Verbundschalter bezeichnet wird. Der Verbundschalter hat eine Anzahl Stellglieder, mit denen entsprechende Stellgrößen einstellbar sind.

Aus der US-A-5 156 049 ist ein handbetätigbares Parametereingabesystem für eine Wuchtmaschine bekannt, welches Eingabeknöpfe aufweist, durch die die Parameter in die Wuchtmaschine eingegeben werden.

Aus Patent Abstracts of Japan, vol. 16, no. 665 (E-1472), Dezember 8, 1993, ist eine Steueranordnung zum Steuern der verschiedenen Kennwerte von Audiosignalen in einer Kraftfahrzeug-Stereoanlage oder dergleichen bekannt. Es werden die Lautstärke, die Tonlage und die Balance gesteuert.

Die EP-A1-520 159 betrifft Menuetasten mit druckempfindlichen Teilflächen für ein an einer Auswuchtmaschine angeordnetes Bildschirmgerät. Die Menuetasten dienen zum Aufrufen eines bestimmten, am Bildschirm anzeigbaren Menues.

Die EP-A1-448 005 betrifft eine Bedienvorrichtung für elektronisch gesteuerte Haushaltgeräte, wobei die Bedienvorrichtung einen Drehwahlschalter, einen auch in axialer Richtung verstellbaren Drehknopf und einen Starttastenblock aufweist.

Die DE-T2-38 83 661 zeigt eine Hilfsvorrichtung für die Steuerung eines Motorfahrzeuges, die einen Funktionszeiger hat, der einen Cursor verschiebt.

Die EP-A1-515 885 zeigt eine Steuervorrichtung für die Einstellung oder den Ablauf von Waschprogrammen, wobei die Vorrichtung einen Wahlknopf und einen Anzeigeknopf aufweist.

Die Aufgabe der Erfindung ist es, die Bedienung einer Auswuchtmaschine so zu vereinfachen, daß eine Bedienperson keine detaillierten Kenntnisse zum Ablauf des Auswuchtvorgang hat, dennoch mit der Maschine gut arbeiten kann.

Diese Aufgabe wird mit einem Verfahren gemäß Anspruch 1 und einem Bedienelement gemäß Anspruch 4 gelöst. Vorteilhafte Ausführungsformen sind in den Unteransprüchen gekennzeichnet.

Erfindungsgemäß kann ein programmgeführter Wuchtlauf zum Auswuchten eines Rades lediglich durch Bedienen eines Einknopf-Bedienelementes durchgeführt werden. Die Bedienung der Machine wird dadurch so stark vereinfacht, daß eine Bedienperson keine detaillierten Kenntnisse zum Ablauf des Auswuchtvorgang mehr haben muß und Fehlbedienungen weitgehend ausgeschlossen sind.

Die Erfindung automatisiert dazu den Auswuchtvorgang bis zu einem Grad, der genau den spezifischen Anforderungen des Auswuchtens angemessen ist. Vorzugsweise ist die Einknopf-Bedienung so gestaltet, daß das Programm stufenweise abläuft und an geeigneten Stellen im Ablauf des Auswuchtvorgangs anhält oder angehalten werden kann und nach einer von der Bedienperson bestimmten Zeit durch Drücken des Knopfes fortgesetzt wird. In der Haltephase verbleibt der Bedienperson hinreichend Zeit, um beispielsweise Ausgleichsgewichte anzubringen. Vorzugsweise durch das Drücken des Knopfes wird der Arbeitsschritt bestätigt und das Programm nimmt abhängig vom aktuellen Programmstatus die nächste logische Funktion für den Wuchtablauf an.

Vorzugsweise umfaßt das Einknopf-Bedienelement mindestens zwei Betätigungsarten, die unterschiedliche Funktionen bewirken:
- Durch Drücken des Knopfes werden Primärfunktionen ausgelöst, wie beispielsweise "Start des Wuchtlauf' oder "Umschalten der Ausgleichsebene".
- Durch das Drehen des Knopfes werden Sekundärfunktionen ausgelöst, wie beispielsweise Eingaben oder Hilfen.

In einer weiteren Ausführungsform kann zusätzlich noch das Ziehen des Knopfes als Betätigungsmöglichkeit vorgesehen werde.

Im folgenden wird die Erfindung anhand einer bevorzugten Ausführungsform unter Bezugnahme auf die begleitenden Zeichnungen beschrieben, in welchen:
- Fig.1: ein Ablaufdiagramm für einen Wuchtlauf gemäß einer bevorzugten Ausführungsform der Erfindung zeigt;
- Fig.2: eine schematische Darstellung eines Einknopf-Bedienelementes in einer bevorzugten Ausführungsform der Erfindung ist.

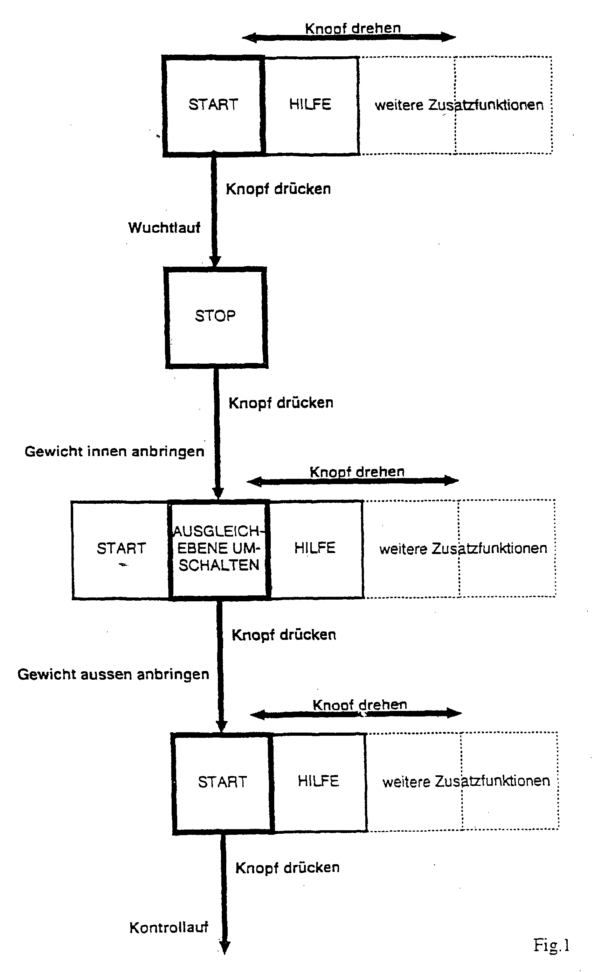

In Fig. 1 ist ein Beispiel für einen Wuchtablauf gezeigt, wobei die mit fetten Linien umrandeten Kästchen "Primärfunktionen" darstellen und die mit dünneren oder gestrichelten Linien gezeigten Kästchen "Sekundärfunktionen" bezeichnen.

Als Primärfunktionen werden diejenigen Funktionen bezeichnet, die den logischen Standardablauf des Wuchtvorgangs tragen, wie beispielsweise "Start des Wuchtlaufs", "Stop des Wuchtlaufs", "Umschalten der Ausgleichsebene", "Start des Kontrollaufs" etc. Durch einfaches Drücken des Knopfes wird der Standardablauf (vertikal, fett umrandet) durchgeführt. Die Sekundärfunktionen können auf jeder Ebene durch Drehen des Bedienelementes abgerufen werden.

Die Sekundärfunktionen betreffen beispielsweise das Aufrufen eines Hilfsmenue, Eingaben oder andere Zusatzfunktionen.

In dem Beispiel von Figur 1 kann am Anfang der Wuchtlauf entweder unmittelbar durch Drücken des Knopfes zur Auslösung der Primärfunktion "Start" gestartet werden oder es kann zunächst eine Sekundärfunktion wie beispielsweise "Hilfe" durch Drehen des Knopfes und Drücken bei der gewünschten Position aktiviert werden. Die gewählten Funktionen können auf einer Anzeige oder ähnlichem angezeigt werden.

Ist die Primärfunktion "Start" ausgelöst worden, so beginnt der Wuchtlauf. Er läuft solange, bis er entweder durch das Programm selbst automatisch oder durch Drücken des Knopfes und Auslösen der Primärfunktion "Stop" angehalten wird. Dem Benutzer bleibt nun Zeit, Ausgleichsgewichte innen auf der Radfelge anzubringen.

Durch weiteres Drücken des Knopfes wird die Primärfunktion "Ausgleichsebene umschalten" ausgelöst, und der selbe Vorgang zum Anbringen der Ausgleichsgewichte aussen wird wiederholt.

Nach dem Anbringen der Gewichte auf den Ausgleichsebenen innen und aussen wird ein Kontrollauf gestartet und bei befriedigendem Ergebnis der Wuchtablauf beendet.

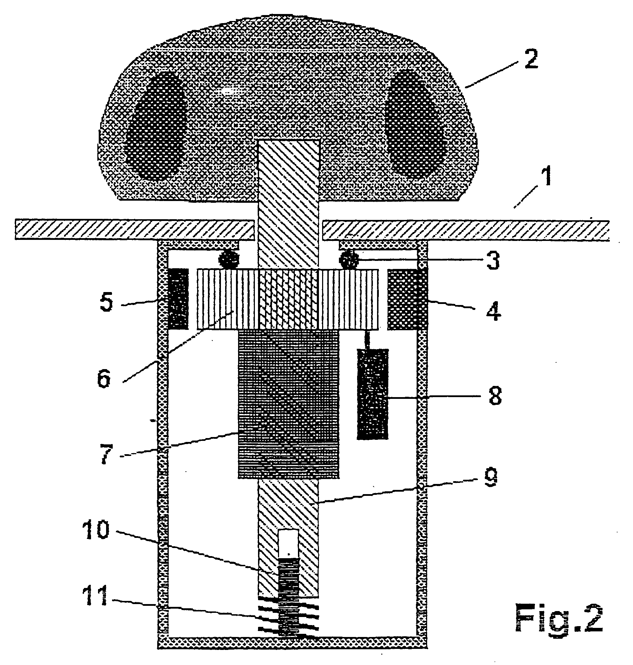

In Figur 2 ist eine bevorzugte Ausführungsform für ein Einknopf-Bedienelement gezeigt, das an einer Gehäusewand 1 vorgesehen ist und mit der Auswuchtmaschine (nicht gezeigt) verbunden ist. Das Element umfaßt einen Knopf 2, der über der Gehäusewand 1 liegt und vom Benutzer betätigt wird. Ein Abstandlager 3 liegt zwischen der Gehäusewand 1 und einem Zahnrad 6 zur drehbaren Lagerung des Knopfes um eine Achse 9. Nahe dem Zahnrad 6 ist ein Magnet 5 für magnetische Rastung und Hallsensoren 4 als Inkrementalgeber angeordnet. Unterhalb des Zahnrades ist eine Kugelbuchse 7 um die Achse 9 vorgesehen. Ein Mikroschalter 8 ist unterhalb des Zahnrades 6 neben der Kugelbuchse 7 angebracht. Die Achse 9 ist auf einer Feder 11 um eine Zentrierung 10 gelagert.

Das gezeigte Einknopf-Bedienelement kann sowohl durch Drücken (primäre Betriebsart) wie auch durch Drehen (sekundäre Betriebsart) betätigt werden. Die Drehbewegungen am Knopf 1 werden über die Achse 9 auf das Zahnrad 6 übertragen und dort von den Hallsensoren detektiert. Der Magnet 5 bewirkt eine magnetische Rastung, um die Bedienbarkeit des Knopfes in bekannter Weise zu erleichtern. Der Knopf wird dabei von der Feder 11 über die Achse 9 oben gehalten und von der Zentrierung 10 zentriert. Ein Druck auf den Knopf 1 gegen die Kraft der Feder 11 wirkt über die Achse 9 und das Zahnrad 6 auf den Mikroschalter 8, der durch die Vertikalbewegung des Zahnrades geschaltet wird.

Die obige Konstruktion erlaubt es, daß das Elnknopf-Bedienelement in beiden Betriebsarten unabhängig betätigt werden kann, d.h. der Knopf kann in jeder Drehstellung gedrückt werden.

Die Ausgangssignale werden nach Verarbeitung in einem Analog/Digital-Schaltkreis einem Rechner zugeführt, der den Wuchtablauf der Unwuchtmaschine programmgeführt steuert.

## Patentansprüche

1. Verfahren zur Bedienung einer Auswuchtmaschine, bei dem der Ablauf des Auswuchtvorgangs in Stufen programmgeführt wird, und bei dem durch eine Bedienperson der programmgeführte Ablauf des Auswuchtvorgangs über ein einziges Einknopf-Bedienelement stufenweise gesteuert wird, und bei dem durch jeweiliges Betätigen des Einknopf-Bedienelementes durch die Bedienperson an den vorgegebenen Stufen des Programms Funktionen ausgelöst werden, die vom aktuellen Stand des programmgeführten Ablaufs des Auswuchtvorgangs abhängen, wobei
- durch Betätigen des Einknopf-Bedienelements in einer primären Betriebsart Primärfunktionen ausgelöst werden, welche den Ablauf gemäß einem vorgegebenen Auswucht-Standardprogramm führen, und
- durch Betätigen des Einknopf-Bedienelementes in einer sekundären Betriebsart Sekundärfunktionen ausgelöst werden, die eine Abweichung vom Auswucht-Standardprogramm auf den vorgegebenen Stufen erlauben.

2. Verfahren nach Anspruch 1, bei dem die Primärfunktionen den Start und Stop eines Wuchtlaufs umfassen, und daß die Sekundärfunktionen mindestens den Aufruf einer Hilfsfunktion einschließen.

3. Bedienelement an einer Auswuchtmaschine durchführend ein Verfahren nach einem der vorhergehenden Ansprüche, wobei das Bedienelement ein Einknopf-Bedienelement aufweist, das in mindestens einer primären Betriebsart Ausführungen von Primärfunktionen und unabhängig davon in mindestens einer sekundären Betriebsart Ausführungen von Sekundärfunktionen betätigt.

4. Bedienelement nach Anspruch 3, wobei das Einknopf-Bedienelement axial bewegbar ist, um die primäre Betriebsart durch Niederdrücken des Bedienelementes auszuführen, und daß das Einknopf-Bedienelement drehbar gelagert ist, um die sekundäre Betriebsart durch Drehen des Einknopf-Bedienelementes auszuführen.

5. Bedienelement nach Anspruch 4, mit einen Knopf (2), der auf einer Achse (9) angeordnet ist, die durch eine Zentrierung (10) zentriert und in vertikaler Richtung bewegbar gelagert ist.

6. Bedienelement nach Anspruch 5, wobei auf der Achse (9) ein Zahnrad (6) angeordnet ist, das mit Sensoren (5) als Inkrementalgeber zusammenwirkt, und daß ein Mikroschalter (8) unterhalb des Zahnrades in Richtung der Achse (9) angebracht ist, der durch das Zahnrad (6) betätigbar ist.

## Claims

1. A method for operating a balancing machine, in which the run of the balancing process is stepwise program-controlled, and in which by an operating person the program-controlled run of the balancing action is steered in steps via only one single-knob control element, and in which by respective operating the single-knob control element by the operating person at the predetermined steps of the program functions are triggered, which depend on the current status of the program-controlled run of the balancing action, wherein by operating the single-knob control element in a primary mode primary functions are triggered, which control the run according to a predetermined balancing standard program, and by operating the single-knob control element in a secondary mode secondary functions are triggered, which allow deviation from the balancing standard program at the predetermined steps.

2. The method of claim 1, wherein the primary functions include starting and stopping a balancing run, and that the secondary functions include at least calling a help function.

3. A control element on a balancing machine carrying out the method of one of the preceding claims, wherein the control element comprises a single-knob control element, which operates in at least a primary mode the carrying out of primary functions and, independently thereof, in at least a secondary mode the carrying out of secondary functions.

4. The control element of claim 3, wherein the single-knob control element is movable axially for executing the primary mode by depressing the control element, and that the single-knob control element is mounted rotatably for executing the secondary mode by turning the single-knob control element.

5. The control element of claim 4, comprising a button (2) disposed on an axle (9) which is centered by a centering device (10) and mounted movably in the vertical direction.

6. The control element of claim 5, wherein a gearwheel (6) is disposed on the axle (9) for cooperating with sensors (5) as incremental transducers, and that a microswitch (8) is mounted below the gearwheel in the direction of the axle (9), said switch being operable by the gearwheel (6).

## Revendications

1. Procédé pour la manipulation d'une machine à équilibrage, dans lequel le déroulement du processus d'équilibrage est commandé en étapes par programme, et dans lequel par une personne de manipulation le déroulement du processus d'équilibrage commandé par programme est commandé en étapes par l'intermédiaire d'un élément de manipulation à un bouton, et dans lequel par une personne de manipulation actionnant respectivement l'élément de manipulation à un bouton sur des étapes déterminées du programme, des fonctions sont déclenchées qui dépendent de l'état actuel du déroulement commandé par programme du processus d'équilibrage, dans lequel
- en actionnant l'élément de manipulation à un bouton dans un mode de fonctionnement primaire, des fonctions primaires sont déclenchées qui conduisent le déroulement selon un programme standard d'équilibrage déterminé, et
- en actionnant l'élément de manipulation à un bouton dans un mode de fonctionnement secondaire, des fonctions secondaires sont déclenchées qui permettent un écart par rapport au programme standard d'équilibrage sur les étapes déterminées.

2. Procédé selon la revendication 1, dans lequel les fonctions primaires comprennent le démarrage et l'arrêt d'une course d'équilibrage, et que les fonctions secondaires comprennent au moins l'appel d'une fonction auxiliaire.

3. Elément de manipulation sur une machine à équilibrage mettant en oeuvre un procédé selon l'une des revendications précédentes, dans lequel l'élément de manipulation présente un élément de manipulation à un bouton actionnant dans au moins un mode de fonctionnement primaire des exécutions de fonctions primaires et, de façon indépendante de ceci, dans au moins un mode de fonctionnement secondaire des exécutions de fonctions secondaires.

4. Elément de manipulation selon la revendication 3, dans lequel l'élément de manipulation à un bouton peut être déplacé axialement pour exécuter le mode de fonctionnement primaire en enfonçant l'élément de manipulation, et que l'élément de manipulation à un bouton est logé pivotamment pour exécuter le mode de fonctionnement secondaire en tournant l'élément de manipulation à un bouton.

5. Elément de manipulation selon la revendication 4, avec un bouton (2) disposé sur un axe (9) centré à l'aide d'un centrage (10) et logé mobile dans le sens vertical.

6. Elément de manipulation selon la revendication 5, dans lequel sur l'axe (9) est disposée une roue dentée (6) coopérant avec des capteurs (5) incrémentaux, et qu'un micro-interrupteur (8) est disposé sous la roue dentée en direction de l'axe (9) pouvant être actionné par la roue dentée (6).
